# EUROPÄISCHE PATENTSCHRIFT

(11) **EP 1 856 656 B1**
(45) Veröffentlichungstag und Bekanntmachung des Hinweises auf die Patenterteilung: **02.05.2012**
(21) Anmeldenummer: 06723170.4
(22) Anmeldetag: 02.03.2006
(51) Int. Cl.: H04N 1/00, B42C 19/02, G06F 17/21, G06K 15/02

(54) **VERFAHREN ZUR VISUALISIERUNG EINES NUTZBEREICHS UND MINDESTENS EINES BESCHNITTBEREICHS**
METHOD FOR VISUALISING A USEFUL AREA AND AT LEAST ONE BLEED AREA
PROCEDE POUR VISUALISER UNE ZONE UTILE ET AU MOINS UNE ZONE A ROGNER

(30) Priorität: 07.03.2005 DE 102005010819
(43) Veröffentlichungstag der Anmeldung: 21.11.2007
(73) Patentinhaber: Hiflex Software GesmbH, 1090 Wien (AT)
(72) Erfinder: REICHHART, Dieter, 52249 Eschweiler (DE)
(74) Vertreter: Bauer, Dirk
(86) Internationale Anmeldenummer: PCT/EP2006/001911
(87) Internationale Veröffentlichungsnummer: WO 2006/094708

(56) Entgegenhaltungen:
- EP-A- 0 895 183
- EP-A- 1 096 781
- EP-A- 1 147 918
- EP-A- 1 195 266
- US-A- 5 717 843
- US-A1- 2003 007 805
- US-A1- 2003 107 640

## Beschreibung

Die Erfindung betrifft ein Verfahren zur Visualisierung eines Nutzbereichs und mindestens eines Beschnittbereichs mittels eines Programms für die grafische Produktion auf einem Ausgabegerät eines Computers, wobei der Nutzbereich ein Endformat eines Druckwerks aufweist und in dem Nutzbereich eine Seite des Druckwerks druckbar ist und der Beschnittbereich an eine Kante des Nutzbereichs angrenzt und entlang der Kante eine langgestreckte Form aufweist.

Als Nutzbereich wird im Rahmen der vorliegenden Schrift ein Teil eines Druck-, Falz- oder Teilbogens im Endformat des Druckwerks bezeichnet, der mit einer Seite des Druckwerks bedruckbar ist. Ein Druckbogen, der plane oder gefalzte Papierbogen aus der Druckmaschine für die Herstellung eines Buchs, einer Broschüre oder eines anderen Druckwerks ist stets größer als das Endformat der einzelnen Seite des Druckwerks. Abgesehen davon, dass auf einem Druckbogen mehrere Seiten eines Druckwerks oder auch verschiedener Druckwerke neben einander gedruckt werden können, weist der Druckbogen neben dem oder den Nutzbereichen einen oder mehrere Beschnittbereiche auf. (Für die Herstellung eines Posters werden die Begriffe "Druckwerk" und "Seite des Druckwerks" im Rahmen der vorliegenden Schrift synonym verwendet.)

Der Beschnittbereich liegt im Druckbogen außerhalb des Nutzbereichs, hat eine Breite von in der Regel zumindest 2 bis 15 mm und wird spätestens bei der buchbinderischen Verarbeitung als "Beschnitt" abgetrennt. Er bietet Platz für die Greifer der Druckmaschine, für den Anschnitt, für Beschnitt-, Druck- und Registermarken und für Farb- oder Graustufenkalibrierungsstreifen, -balken oder -keile, anhand derer die Druckqualität beim Bilddruck überprüft und die exakte Farbführung eingestellt wird.

Der Beschnittbereich der ersten Seite eines Druckbogens nimmt beispielsweise die Bogennorm, also in Kurzform den Buchtitel mit der Auflagenbezeichnung und die Bogensignatur mit der laufenden Nummer und der Anzahl der Druckseiten auf. Andere Markierungen erleichtern die Handhabung des bedruckten und/oder gefalzten Druckbogens. Als "Flattermarken" werden auf jedem fertig gefalzten Bogenrücken angebrachte Balken bezeichnet, die dem Buchbinder beim Zusammentragen die intuitive Erfassung der richtigen Reihenfolge erleichtern: Bei richtiger Anordnung der Bögen sind die Flattermarken treppenförmig zu sehen. "Schneidemarken" sind kleine Markierungen auf dem Druckbogen, die dem Buchbinder anzeigen, an welcher Stelle der Bogen beschnitten oder getrennt werden soll, anhand von "Falzmarken" erkennt er, wie ein Bogen zu falzen ist.

Druckbögen für Druckverfahren, beispielsweise Offset-, Hoch-, Tief-, Flexo oder Digitaldruck werden im Rahmen der (zunehmend vernetzten) grafischen Produktion mittels allgemein bekannter, hoch spezialisierter CAD- ("Computer Aided Design"-) Systeme mit aufeinander abgestimmten Hard- und Softwarekomponenten entworfen. Gegenüber dem manuellen Entwurf bieten derartige Systeme eine Vielzahl von Vorteilen. Insbesondere können Entwürfe für Druckbögen mit geringem Aufwand archiviert werden und stehen so als Grundlage für spätere ähnliche Anwendungen zur Verfügung. Durch die Verknüpfung von Maßen bieten CAD-Systeme zudem einerseits eine automatische Plausibilitätskontrolle, andererseits können bei der Änderung eines Maßes (beispielsweise des Seitenformats) verknüpfte Maße (beispielsweise die Breite eines Beschnittbereichs, die Lage oder Größe einer Markierung) automatisch nachgeführt werden.

Ein solches hoch spezialisiertes CAD-System, das ein Verfahren der eingangs genannten Art zur Visualisierung des Druckbogens oder von Teilen desselben realisiert, wird beispielsweise unter dem Handelsnamen "PREPS" von Creo Inc., Canada vertrieben. Im Rahmen des bekannten CAD-Systems stehen in einem Visualisierungsmodul zur Darstellung des Druckbogens auf einem Ausgabegerät eines Computers (auf einem Bildschirm, einem Beamer oder einem Drucker) verschiedene Ansichten zur Verfügung: Der Druckbogen kann in einer Übersichtsdarstellung als Ganzes (verkleinert) oder für Detaildarstellungen ausschnittsweise vergrößert auf einem oder mehreren angeschlossenen Ausgabegeräten dargestellt werden. In der Übersichtsdarstellung sind - durch die beschränkte Größe und Auflösung der üblicher Weise verwendeten Bildschirme - die im Verhältnis zum Nutzbereich sehr schmalen Beschnittbereiche und die in diesen angeordneten entsprechend relativ kleinen Elemente jedoch praktisch nicht zu erkennen. In der Darstellung vergrößerter Ausschnitte fehlt wiederum die unmittelbare optische Verbindung zum Rest des Druckbogens.

Bekannt ist aus CAD-Systemen die Funktion "Lupe", mittels derer - in Anlehnung an die Funktionsweise einer optischen Lupe - beispielsweise in der Übersichtsdarstellung (des Druckbogens) ein Detail vergrößert darstellbar ist. Hierbei kann das dargestellte Detail im Lupenbereich entweder proportional oder unproportional vergrößert werden. Im ersten Fall werden von der Lupe überdeckte Bereiche der Übersichtsdarstellung verdeckt, im zweiten durch einen kontinuierlichen Abfall des Vergrößerungsfaktors zu den Rändern der Lupe stark verzerrt dargestellt. Insgesamt ermöglichen die aus CAD-Systemen bekannten Ansichten nur sehr bedingt ein intuitives Erfassen des Beschnittbereichs und der in diesem angeordneten Elemente im Verhältnis zur übrigen Druckseite. US 20030107640 offenbart ein Verfahren zur automatischen generierung von Marken.

### Aufgabe

Der Erfindung liegt die Aufgabe zugrunde, ein Verfahren der einleitend genannten Art vorzuschlagen, dass ein intuitives Erfassen insbesondere des Beschnittbereichs einer Druckseite erleichtert.

### Lösung

Ausgehend von den bekannten Verfahren wird nach der Erfindung vorgeschlagen, dass in einer gemeinsamen Darstellung von Nutzbereich und Beschnittbereich mindestens ein Maß des Beschnittbereichs gegenüber dem Nutzbereich unproportional vergrößert dargestellt wird. Durch die unproportionale Darstellung im Rahmen der Übersichtsdarstellung kann ein Maß, das aufgrund seiner relativen Größe im Vergleich zum Nutzbereich in einer proportionalen Darstellung kaum sichtbar wäre, besonders einfach visualisiert werden. Durch die Nachführung der mit dem vergrößert dargestellten Maß verknüpften Maße - insbesondere das Seitenformat - wird in der Übersichtsdarstellung weiterhin neben dem Beschnittbereich der Nutzbereich dargestellt und so die intuitive Erfassung gegenüber den bekannten Verfahren signifikant erleichtert.

In einer besonders geeigneten Ausprägung des erfindungsgemäßen Verfahrens wird ein senkrecht zu der Kante gerichtetes Maß vergrößert dargestellt. So wird zwar der Beschnittbereich selbst unproportional verzerrt, die optische Verbreiterung eines rechteckförmigen Bereichs ist jedoch für den sachverständigen Anwender leicht als Hilfsmittel zur Visualisierung zu erkennen und zu interpretieren, ohne die intuitive Erfassung insgesamt einzuschränken.

Besonders vorteilhafter Weise kann im Rahmen eines erfindungsgemäßen Verfahrens auch ein Maß eines in dem Beschnittbereich angeordneten Elements vergrößert dargestellt werden. Beispielsweise können auf dieses Weise Flatter-, Falz- oder Schneidmarken quer zum Beschnittbereich "verlängert" oder Kalibrierungsstreifen "verbreitert" und somit leichter erfassbar dargestellt werden.

In einer für die Weiterverarbeitung von Vorlagen besonders geeigneten erfindungsgemäßen Darstellung wird die Druckseite vermaßt dargestellt. So können die Maße der Vorlage besonders einfach mit den geforderten Maßen abgeglichen werden. Durch eine editierbare Vermaßung und die unmittelbare Änderung der Darstellung der Druckseite nach Änderung der Vermaßung wird der Blick für die Zusammenhänge der einzelnen Maße geschärft und deren intuitive Erfassung wiederum erleichtert.

Besonders bevorzugt können im Rahmen eines erfindungsgemäßen Verfahrens verschiedene Maße von im Beschnittbereich angeordneten Elementen mit unabhängigen Faktoren vergrößert dargestellt werden. So können Elemente innerhalb des Beschnittbereichs je nach Anforderung des Betrachters einzeln vergrößert und so quasi ein- und ausgeblendet werden. Die gleichmäßige Vergrößerung aller Maße quer zur Längsrichtung des Beschnittbereichs ermöglicht dem Betrachter demgegenüber einen besonders guten Eindruck von der Lage aller Elemente im Beschnittbereich zueinander und zum Beschnittbereich.

In einer besonders vorteilhaften Ausprägung des erfindungsgemäßen Verfahrens werden Faktoren zur Vergrößerung verschiedener Elemente unter einer gemeinsamen Bezeichnung gespeichert und abgerufen. Beispielsweise kann eine zehnfache Vergrößerung aller Beschnittbereiche und aller darin angeordneten Elemente gegenüber dem Nutzbereich unter der Bezeichnung "Beschnitt-Detail", unter der Bezeichnung "Druckmarken" eine Vergrößerung aller Druckmarken und zugehöriger Beschnittbereiche und unter der Bezeichnung "Kopfbeschnitte" eine Vergrößerung aller Kopfbeschnitte aus einer Auswahlliste abrufbar sein. So wird die Handhabung des erfindungsgemäßen Verfahrens signifikant vereinfacht.

### Ausführungsbeispiel

Die Erfindung wird nachfolgend anhand eines Ausführungsbeispiels erläutert. Es zeigen
- Fig. 1: eine proportionale Ansicht eines Druckbogens nach dem Stand der Technik und
- Fig. 2: eine erfindungsgemäße Ansicht eines Druckbogens.

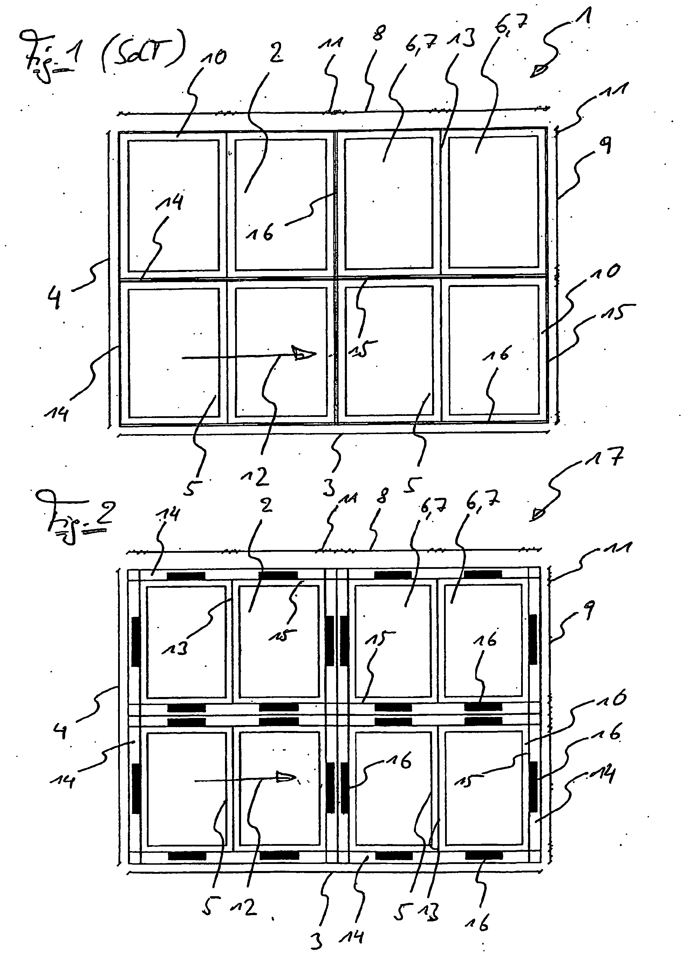

Die in Figur 1 gezeigte proportionale Ansicht 1 eines Druckbogens 2 mit einer Länge 3 von 880 mm und einer Breite 4 von 630 mm ("Standardformat") ist aus den bekannten CAD-Systemen prinzipiell geläufig. Der Druckbogen 2 weist acht jeweils in Doppelseiten 5 einander zugeordnete Nutzbereiche 6 auf, in denen jeweils eine Druckseite 7 eines nicht weiter dargestellten Druckwerks mit einer Breite 8 von 210 mm und einer Höhe 9 von 297 mm (Format DIN A4) druckbar ist. Innerhalb jedes Nutzbereichs 6 ist die Druckseite 7 von einem nicht zu bedruckenden Bereich 10 mit einer Breite 11 von 10 mm umgeben.

Innerhalb der Doppelseiten 5 sind die Nutzbereiche 6 in der Laufrichtung 12 des Papiers (Schmalbahn) mit den Längsseiten 13 aneinander angrenzend hintereinander angeordnet. Angrenzend an die Doppelseiten 5 sind allseits langgestreckte Beschnittbereiche 14 angeordnet, in denen angrenzend an jeden Nutzbereich 6 jeweils beispielhaft ein entlang der jeweiligen Kante 15 langgestrecktes Element 16 angeordnet ist. Auf dem Druckbogen 2 sind zwei Doppelseiten 5 mit den ihnen zugeordneten Beschnittbereichen 14 in der Laufrichtung 12 jeweils hintereinander und nebeneinander angeordnet.

Figur 2 zeigt demgegenüber eine erfindungsgemäße Ansicht 17 auf einem nicht dargestellten Bildschirm eines Programms für eine (vernetzte) grafische Produktion, insbesondere ein Management Information System (MIS) oder ein Programm zur Steuerung eines ausführenden Systems wie einer Druckvorstufe, eines Plattenbelichters, einer Druck-, Falz- oder Schneidmaschine.

In der Ansicht 17 sind die Beschnittbereiche 14 des aus Figur 1 bekannten Druckbogens 2 gemäß einem erfindungsgemäßen Verfahren durch eine Verbreiterung senkrecht zu den Kanten 15 gegenüber dessen Nutzbereichen 6 unproportional vergrößert und die Nutzbereiche 6 entsprechend verkleinert dargestellt. Dadurch sind die Beschnittbereiche 14 und in diesem die Elemente 16 optisch deutlich hervorgehoben, und zugleich ist ihre Lage im Kontext des Druckbogens 2 für den Fachmann intuitiv leicht zu erfassen.

Die erfindungsgemäße Visualisierung des Druckbogens 2 auf einem in der Größe wie auch in der Auflösung gegenüber dem realen Druckbogen stark eingeschränkten Ausgabegerät ermöglicht dem Fachmann, der mit diesem Programm die grafische Produktion plant, steuert oder überwacht oder ein ausführendes System bedient, gegenüber den bekannten Systemen eine deutlich vereinfachte und zugleich sicherere Beurteilung der Anordnung der Elemente 16 in den Beschnittbereichen 14 und in ihrer räumlichen Beziehung zu den Nutzbereichen 6 auf dem Druckbogen 2.

Die Doppelseiten 5, Nutzbereiche 6, Längsseiten 13, Beschnittbereiche 14 und Elemente 16 sind in den Zeichnungsfiguren zugunsten einer übersichtlichen Darstellung nur beispielhaft mit Nummern versehen.

In den Figuren sind
- 1: Ansicht
- 2: Druckbogen
- 3: Länge 4 Breite
- 5: Doppelseite
- 6: Nutzbereich
- 7: Druckseite
- 8: Breite
- 9: Höhe
- 10: nicht zu bedruckender Bereich
- 11: Breite
- 12: Laufrichtung
- 13: Längsseite
- 14: Beschnittbereich
- 15: Kante
- 16: Element
- 17: Ansicht

## Patentansprüche

1. Verfahren zur Visualisierung eines Nutzbereichs (6) und mindestens eines Beschnittbereichs (14) mittels eines Programms für die grafische Produktion in einer gemeinsamen Darstellung auf einem Ausgabegerät eines Computers, wobei der Nutzbereich (6) ein Endformat eines Druckwerks aufweist und in dem Nutzbereich (6) eine Seite des Druckwerks druckbar ist und der Beschnittbereich (14) an eine Kante (15) des Nutzbereichs (6) angrenzt und entlang der Kante (15) eine langgestreckte Form aufweist, ***dadurch gekennzeichnet, dass*** der Beschnittbereich (14) senkrecht zu der Kante (15) unproportional gegenüber dem Nutzbereich (6) vergrößert dargestellt wird.

2. Verfahren nach dem vorgenannten Anspruch, ***dadurch gekennzeichnet, dass*** mindestens ein Maß eines in dem Beschnittbereich (14) angeordneten Elements (16) vergrößert dargestellt wird.

3. Verfahren nach einem der vorgenannten Ansprüche, ***dadurch gekennzeichnet, dass*** die Druckseite vermaßt dargestellt wird.

4. Verfahren nach dem vorgenannten Anspruch, ***dadurch gekennzeichnet, dass*** die Vermaßung editierbar ist und nach Änderung der Vermaßung die Druckseite gemäß der geänderten Vermaßung dargestellt wird.

5. Verfahren nach einem der vorgenannten Ansprüche, ***dadurch gekennzeichnet, dass*** verschiedene Maße von im Beschnittbereich (14) angeordneten Elementen (16) mit unabhängigen Faktoren vergrößert dargestellt werden.

6. Verfahren nach einem der vorgenannten Ansprüche, ***dadurch gekennzeichnet, dass*** mehrere Nutzbereiche (6) eines Druck-, Falz- oder Teilbogens gemeinsam mit den angrenzenden Beschnittbereichen (14) dargestellt und gleiche Elemente (16) verschiedener Beschnittbereiche (14) gleichermaßen vergrößert dargestellt werden.

7. Verfahren nach einem der vorgenannten Ansprüche, ***dadurch gekennzeichnet, dass*** Faktoren zur Vergrößerung verschiedener Elemente (16) unter einer gemeinsamen Bezeichnung gespeichert und abgerufen werden.

## Claims

1. A method for visualizing a use section (6) and at least one bleed area (14) by means of a program for graphical production in a joint depiction on an output device of a computer, wherein the use section (6) has an end format of a print product, and a page of the print product can be printed in the use section (6), and the bleed area (14) adjoins an edge (15) of the use section (6) and has an elongated shape along the edge (15), **characterised in that** the bleed area (14) is shown disproportionately enlarged with respect to the use section (6) in a direction perpendicular to the edge (15).

2. The method according to the aforesaid claim, **characterised in that** at least one dimension of an element (16) disposed in the bleed area (14) is shown enlarged.

3. The method according to any one of the aforesaid claims, **characterised in that** the print page is shown with dimensions.

4. The method according to any one of the aforesaid claims, **characterised in that** the dimensioning can be edited and the print page is shown according to the changed dimensioning after changing the dimensioning.

5. The method according to any one of the aforesaid claims, **characterised in that** different dimensions of elements (16) disposed in the bleed area (14) are shown enlarged by independent factors.

6. The method according to any one of the aforesaid claims, **characterised in that** several use sections (6) of a print, fold or partial sheet are shown together with the adjacent bleed areas (14) and that identical elements (16) of different bleed areas (14) are shown with the same enlargement.

7. The method according to any one of the aforesaid claims, **characterised in that** factors for enlarging various elements (16) are stored and called up under a common designation.

## Revendications

1. Procédé de visualisation d'une zone utile (6) et d'au moins une zone à rogner (14) au moyen d'un programme pour la production graphique dans une représentation commune sur un périphérique de sortie d'un ordinateur, dans lequel la zone utile (6) présente un format final d'un groupe d'impression et une page du groupe d'impression peut être imprimée dans la zone utile (6), et la zone à rogner (14) est délimitée sur un bord (15) de la zone utile (6) et présente une forme étirée en longueur de long du bord (15), **caractérisé en ce que** la zone à rogner (14) est représentée verticalement par rapport au bord (15), de manière agrandie non proportionnellement par rapport à la zone utile (6).

2. Procédé selon la revendication précédente, **caractérisé en ce qu'**au moins une dimension d'un élément (16) disposé dans la zone à rogner (14) est représentée agrandie.

3. Procédé selon l'une des revendications précédentes, **caractérisé en ce que** la page imprimée est représentée cotée.

4. Procédé selon la revendication précédente, **caractérisé en ce que** la représentation des cotes peut être éditée et qu'après modification de la représentation des cotes, la page imprimée est représentée selon la représentation des cotes modifiée.

5. Procédé selon l'une des revendications précédentes, **caractérisé en ce que** différentes mesures d'éléments disposés (16) dans la zone à rogner (14) sont représentées agrandies avec des facteurs indépendants.

6. Procédé selon l'une des revendications précédentes, **caractérisé en ce que** plusieurs zones utiles (6) d'une feuille d'impression, d'une feuille pliée ou partielle sont représentées conjointement avec les zones à rogner (14) limitrophes et les mêmes éléments (16) de différentes zones à rogner (14) sont représentés agrandis avec les mêmes dimensions.

7. Procédé selon l'une des revendications précédentes, **caractérisé en ce que** des facteurs pour agrandir différents éléments (16) sont enregistrés et appelés sous une désignation commune.
